# EUROPÄISCHE PATENTANMELDUNG

(11) **EP 3 656 796 A1**
(43) Veröffentlichungstag der Anmeldung: **27.05.2020**
(21) Anmeldenummer: 18207740.4
(22) Anmeldetag: 22.11.2018
(51) Int. Cl.: C08G 2/08, C08G 2/18, C08G 2/06

(54) **VERFAHREN ZUR HERSTELLUNG VON POLYOXYMETHYLEN-POLYMEREN MIT MITTLERER KETTENLÄNGE**

(71) Anmelder: Covestro Deutschland AG, 51373 Leverkusen (DE); Ineos Paraform GmbH & Co. KG, 55120 Mainz (DE)
(72) Erfinder: Schalke, Dr. Peter, 55122 Mainz (DE); Heller, Dr. Maik, 61352 Bad Homburg (DE); Dittmer, Torsten, 61462 Königstein (DE); Meuresch, Dr. Markus, 51109 Köln (DE); Wolf, Dr. Aurel, 42489 Wülfrath (DE); Gürtler, Dr. Christoph, 50735 Köln (DE); Stute, Dr. Annika, 50733 Köln (DE)
(74) Vertreter: Michalski Hüttermann & Partner Patentanwälte mbB

(57) **Zusammenfassung**

Ein Verfahren zur Herstellung von Polyoxymethylen-Polymeren umfasst die Reaktion von wässriger Formaldehyd-Lösung mit einer wässrigen Lösung einer Base, wobei
A) eine Starterlösung umfassend Formaldehyd vorgelegt wird und
B) eine wässrige Formaldehyd-Lösung und eine Base zu der Starterlösung hinzugefügt werden, so dass eine Reaktionsmischung erhalten wird.

Die Starterlösung in Schritt A) weist eine Temperatur von ≥ 40 °C bis ≤ 46 °C auf und die Zugaben der Lösungen in Schritt B) werden bei einer Temperatur der Reaktionsmischung von ≥ 40 °C bis ≤ 46 °C durchgeführt. Für den Fall, dass die Basie ein Alkalimetallhydroxid ist, beträgt das molare Verhältnis von Formaldehyd zu Base ≥ 55:1 bis ≤ 90:1, bezogen auf die Gesamtmengen an im Verfahren eingesetzten Formaldehyd und Base und die Base in Schritt B) wird in wässriger Lösung hinzugefügt.

## Beschreibung

Die vorliegende Erfindung betrifft ein Verfahren zur Herstellung von Polyoxymethylen-Polymeren, umfassend die Reaktion von wässriger Formaldehyd-Lösung mit einer wässrigen Lösung einer Base, wobei A) eine Starterlösung umfassend Formaldehyd und eine Base vorgelegt wird und B) eine wässrige Formaldehyd-Lösung und eine Base gleichzeitig zu der Starterlösung hinzugefügt werden, so dass eine Reaktionsmischung erhalten wird. Die Erfindung betrifft ebenfalls ein durch das erfindungsgemäße Verfahren erhältliches Polyoxymethylen-Polymer.

Bei der Umsetzung von Formaldehyd mit alkalischen Verbindungen wie z. B. Natronlauge, Kalilauge, verschiedenen Aminen etc. kann Formaldehyd je nach Reaktionsbedingungen wie folgt reagieren:
1) Zunächst ist zu beachten, dass höherprozentige Formaldehyd-Lösungen bei Unterkühlung klebrigen wasserhaltigen Paraformaldehyd abscheiden, der sich nicht abfiltrieren lässt. Als Faustformel gilt, dass die Unterkühlung einer Formaldehyd-Lösung vermeiden werden kann, wenn die Temperatur in Grad Celsius mindestens der Höhe der Formaldehyd-Konzentration in Gewichts-% entspricht.
2) Bei der Cannizzaro-Reaktion werden aus zwei Molekülen Formaldehyd Ameisensäure und Methanol gemäß 2 CH₂O → HCOOH + CH₃OH erhalten. Die Reaktionsgeschwindigkeit steigt mit zunehmender Temperatur der Lösung an und ist der Grund, warum hochprozentige Lösungen nicht lange lagerfähig sind.
3) Bei der sogenannten "Verzuckerungsreaktion", die technisch zur Entgiftung von formaldehydhaltigen Lösungen verwendet wird, entstehen über die Triose (Glycerinaldehyd) die isomeren Zucker Sorbose und Fructose. Die Reaktion kann als eine Polymerisation über die C-Atome angesehen werden, die bei Erreichen der aus 6 C-Atomen bestehenden Zucker zum Stillstand kommt: 3 CH₂O → HOCH₂CH(OH)CHO + weitere 3 CH₂O → Sorbose und Fruktose. Die Reaktion ist exotherm und kann sich deshalb selbst beschleunigen.

Heute industriell hergestellte polymere Formen des Formaldehyds sind kurzkettige Polymere, die als Paraformaldehyd bekannt sind und eine Molekülmasse von ca. 500 g/mol aufweisen, sowie langkettige Polyoxymethylen-Polymere (POM), die in der Regel eine Molekülmasse von ca. 10000 g/mol bis 30000 g/mol aufweisen.

WO 2004/096746 A1 offenbart Ausgangsverbindungen zur Herstellung von Polyurethanen, die durch Umsetzung von Hydroxylgruppen enthaltenden Oligomeren von Formaldehyd herstellbar sind. Als Oligomere kommen die gemäß EP 1 063 221 A1 herstellbaren Verbindungen der Formel HO-[CH₂-O]ₙ-H mit n = 2 bis 19, vorzugsweise n = 1 bis 9, in Frage.

WO 2015/155094 A1 betrifft ein Verfahren zur Herstellung von Polyoxymethylen-Blockcopolymeren durch katalytische Anlagerung von Alkylenoxiden sowie gegebenenfalls weiteren Comonomeren an wenigstens eine polymere Formaldehyd-Starterverbindung, welche wenigstens eine terminale Hydroxylgruppe aufweist, in Gegenwart eines Doppelmetallcyanid (DMC)- Katalysators, wobei (i) in einem ersten Schritt der DMC-Katalysator in Gegenwart der polymeren Formaldehyd-Starterverbindung aktiviert wird, wobei zur Aktivierung des DMC-Katalysators eine Teilmenge (bezogen auf die Gesamtmenge der bei der Aktivierung und Polymerisation eingesetzten Menge an Alkylenoxiden) von einem oder mehreren Alkylenoxiden zugesetzt wird, (ii) in einem zweiten Schritt ein oder mehrere Alkylenoxide sowie gegebenenfalls weitere Comonomere zu der aus Schritt (i) resultierenden Mischung zugesetzt werden, wobei die in Schritt (ii) eingesetzten Alkylenoxide gleich oder verschieden sein können von den bei Schritt (i) eingesetzten Alkylenoxiden, dadurch gekennzeichnet, dass die Aktivierung des DMC-Katalysators im ersten Schritt (i) bei einer Aktivierungstemperatur (T_{act}) von 20 bis 120 °C erfolgt.)

In WO 2015/155094 A1 wird ausgeführt, dass geeignete polymere Formaldehyd-Starterverbindungen im Allgemeinen Molmassen von 62 bis 30000 g/mol, bevorzugt von 62 bis 12000 g/mol, besonders bevorzugt von 242 bis 6000 g/mol und ganz besonders bevorzugt von 242 bis 3000 g/mol aufweisen und von 2 bis 1000, bevorzugt von 2 bis 400, besonders bevorzugt von 8 bis 200 und ganz besonders bevorzugt von 8 bis 100 Oxymethylen-Wiederholungseinheiten umfassen. Die Herstellung der Starterverbindungen wird jedoch nicht beschrieben. In den Ausführungsbeispielen wird kommerzieller Paraformaldehyd eingesetzt.

Erfindungsgemäß vorgeschlagen wird ein Verfahren zur Herstellung von Polyoxymethylen-Polymeren, umfassend die Reaktion von wässriger Formaldehyd-Lösung mit einer wässrigen Lösung einer Base, wobei A) eine Starterlösung umfassend Formaldehyd vorgelegt werden und B) eine wässrige Formaldehyd-Lösung und eine Base zu der Starterlösung hinzugefügt werden, so dass eine Reaktionsmischung erhalten wird. Die Starterlösung in Schritt A) weist eine Temperatur von ≥ 40 °C bis ≤ 46 °C auf, die Zugaben der Lösungen in Schritt B) werden bei einer Temperatur der Reaktionsmischung von ≥ 40 °C bis ≤ 46 °C durchgeführt. Für den Fall, dass die Base ein Alkalimetallhydroxid ist, beträgt das molare Verhältnis von Formaldehyd zu Base ≥ 55:1 bis ≤ 90:1, bezogen auf die Gesamtmengen an im Verfahren eingesetzten Formaldehyd und Base und die Base in Schritt B) wird in wässriger Lösung hinzugefügt.

Es wurde überraschenderweise gefunden, dass mit den erfindungsgemäß vorgegebenen Parametern Polyoxymethylen-Polymere mit mittlerer Kettenlänge, das heißt mit einer Anzahl von Formaldehydeinheiten im Polymer zwischen der von Paraformaldehyd und der von POM, erhalten lassen.

Die Basen in der Starterlösung und in Schritt B) können gleich oder verschieden sein. Bevorzugt ist, dass die Basen gleich sind.

Die Verwendung von wässriger Basenlösung auch über den Einsatz von Alkalimetallhydroxidbasen hinaus hat den Vorteil, dass die Verzuckerungsreaktion als Nebenreaktion verringert wird. In eigenen Untersuchungen wurde beobachtet, dass bei festen NaOH-Plätzchen, die sich in stark exothermer Reaktion zunächst in der Formaldehyd-Lösung auflösen müssen, sofort eine Verzuckerungsreaktion ausgelöst wurde, was an der gelb-braunen Farbe erkennbar war, die sich um die sich auflösenden NaOH-Plätzchen bildete. Um weiterhin möglichst wenig Wasser in das Reaktionssystem einzutragen, sind Basenkonzentrationen in Schritt B) von ≥ 350 g/Liter bis ≤ 700 g/Liter bevorzugt und ≥ 400 g/Liter bis ≤ 600 g/Liter sind mehr bevorzugt.

Die Zugabe von Formaldehyd-Lösung und Basenlösung in Schritt B) erfolgt vorzugsweise gleichzeitig, beispielsweise durch gleichzeitiges Zutropfen der Lösungen. Selbstverständlich müssen die einzelnen Tropfen von Formaldehyd-Lösung und Base nicht synchron in der Reaktionsmischung eintreffen.

Es ist bevorzugt, dass zwischen dem Beginn der Zugabe der Formaldehyd-Lösung und dem Beginn der Basenzugabe in Schritt B) eine Dauer von ≤ 60 Sekunden und mehr bevorzugt ≤ 10 Sekunden liegen. Weiterhin ist es bevorzugt, dass zwischen dem Ende der Zugabe der Formaldehyd-Lösung und dem Ende der Basenzugabe in Schritt B) eine Dauer von ≤ 60 Sekunden und mehr bevorzugt ≤ 10 Sekunden liegen.

In Schritt B) wird die Formaldehyd-Lösung bevorzugt so dosiert, dass ≥ 100 Gewichts-% bis ≤ 200 Gewichts-% (bevorzugt ≥ 130 Gewichts-% bis ≤ 150 Gewichts-%), bezogen auf das Gewicht der in Schritt A) vorgelegten Starterlösung, pro Stunde hinzugefügt werden. Es ist möglich, zu Beginn des Verfahrens eine geringere Dosierrate für die Formaldehyd-Lösung als gegen Ende zu wählen. Beispielsweise kann die durchschnittliche Dosierrate während der ersten Hälfte der Zugabezeit in Schritt B) ≥ 50% bis ≤ 90% der durchschnittlichen Dosierrate während der zweiten Hälfte betragen.

Bei der Polymerisationsreaktion treten die beiden vorgenannten Nebenreaktionen 2) und 3) auf, die so weit wie möglich zurückgedrängt werden sollten. Hierzu sollte die Reaktion bei möglichst niedriger Temperatur durchgeführt werden. Diese sollte andererseits nicht zu niedrig liegen, weil sonst eine unkontrollierte Abscheidung von Formaldehyd durch Unterkühlung aus der Lösung auftritt.

Je niedriger die Reaktionstemperatur gewählt wird, desto niedriger wird vorteilhafterweise die Formaldehydkonzentration in der Lösung gewählt, was aber wiederum mit dem Anstieg des Wassergehaltes zu einer deutlichen Verringerung der Reaktionsgeschwindigkeit führen kann. Der erfindungsgemäß vorgesehene Temperaturbereich von ≥ 40 °C bis ≤ 46 °C stellt den Kompromiss zwischen den gegenläufigen Anforderungen dar und ermöglicht erst die sinnvolle Herstellung der Polyoxymethylen-Polymere unter weitgehender Zurückdrängung der zuvor beschriebenen Nebenreaktionen. Bevorzugt sind ≥ 41 °C bis ≤ 46 °C, mehr bevorzugt ≥ 42 °C bis ≤ 43 °C. Dieses gilt sowohl für die Temperierung in Schritt A) als auch für die Reaktionsmischung in Schritt B).

Dabei wird vorzugsweise eine Formaldehyd-Konzentration von etwa 40 % in der Lösung eingestellt. Die Zugabe der ca. 60%igen Formaldehyd-Lösung und der entsprechenden Menge an Base erfolgt vorzugsweise in dem Maße, wie die Reaktion voranschreitet und die Konzentration absinkt, so dass eine Konzentration von etwa 40% in der Lösung erhalten bleibt. Eine tiefere Temperatur wie z. B. 30 °C, was eine Formaldehydkonzentration von 30 % erfordern würde, führt zu unwirtschaftlich sehr langen Reaktionszeiten, obwohl diese Temperatur an sich günstig für die Unterdrückung der Nebenreaktionen wäre.

Das molare Gesamtverhältnis von Formaldehyd zu Base beträgt beim Einsatz von Alkalimetallhydroxid-Basen ≥ 55:1 bis ≤ 90:1 und vorzugsweise ≥ 60:1 bis ≤ 86:1. Bei anderen Basen, beispielsweise Stickstoffbasen wie Ammoniak oder zu Ammoniak zerfallendem Hexamin (Urotropin) kann das molare Gesamtverhältnis von Formaldehyd zu Base zum Beispiel ≥ 25:1 bis ≤ 100:1 und vorzugsweise ≥ 30:1 bis ≤ 50:1 betragen. Für mehrwertige Basen wird jede Protonenakzeptorkapazität einzeln gezählt. Wenn eine Mischung mehrerer Basen verwendet wird, wird selbstverständlich die Gesamt-Protonenakzeptorkapazität der Mischung als Grundlage für die Berechnung des molaren Verhältnisses verwendet. Als konkretes Beispiel können ein Gesamtverhältnis von 76 Mol Formaldehyd (berechnet als 100 %) zu einem 1 Mol NaOH (ebenfalls berechnet zu 100 %) sowie 86 Mol Formaldehyd zu einem Mol KOH dienen.

Geeignete Reaktionsgefäße für das erfindungsgemäße Verfahren sind zum Beispiel thermostatisierte Reaktionskessel und vorzugsweise thermostatisierte Mischer-Kneter.

In einer bevorzugten Ausführungsform ist die Starterlösung eine wässrige Starterlösung. Im Rahmen der vorliegenden Erfindung bedeutet der Begriff "wässrige Lösung", dass die Lösung mindestens 45 Gewichts-%, bezogen auf das Gesamtgewicht der Lösung, Wasser enthält. Bevorzugt sind mindestens 50 Gewichts-%, mehr bevorzugt mindestens 60 Gewichts-%.

In einer weiteren bevorzugten Ausführungsform umfasst die Starterlösung weiterhin eine Base. Der Basengehalt der Starterlösung beträgt bevorzugt ≥ 0.1 Gewichts-% bis ≤ 5 Gewichts-%, mehr bevorzugt ≥ 0.3 Gewichts-% bis ≤ 1 Gewichts-%.

In einer weiteren bevorzugten Ausführungsform weist die Starterlösung einen Formaldehydgehalt von ≥ 35 Gewichts-% bis ≤ 50 Gewichts-%, bezogen auf das Gesamtgewicht der Lösung, auf. Bevorzugt sind ≥ 37 Gewichts-% bis ≤ 45 Gewichts-%, mehr bevorzugt ≥ 40 Gewichts-% bis ≤ 42 Gewichts-%.

In einer weiteren bevorzugten Ausführungsform weist die Formaldehyd-Lösung in Schritt B) einen Formaldehydgehalt von ≥ 50 Gewichts-%, bezogen auf das Gesamtgewicht der Lösung, auf. Bevorzugt sind ≥ 55 Gewichts-% bis ≤ 70 Gewichts-%, mehr bevorzugt ≥ 60 Gewichts-% bis ≤ 65 Gewichts-%. Eine möglichst hohe Formaldehyd-Konzentration ist vorteilhaft, da bei einem Absinken des Formaldehyd-Gehaltes in der Lösung die Reaktion stark verlangsamt wird und gewöhnlich bei etwa 20 % Formaldehyd-Gehalt zum Stillstand kommt, wie eigene Untersuchungen ergeben haben.

In einer weiteren bevorzugten Ausführungsform weisen die Starterlösung und/oder die Formaldehyd-Lösung einen Gehalt an Methanol von ≤ 1 Gewichts-%, bezogen auf das Gesamtgewicht der Lösung, auf. Bevorzugt sind Methanolgehalte von ≤ 0.8 Gewichts-% und mehr bevorzugt ≤ 0.7 Gewichts-%. Solche Formaldehyd-Qualitäten können aus Anlagen erhalten werden, die nach dem Silberkontakt-Verfahren mit Methanolballast arbeiten. Hierbei kann eine Formaldehyd-Lösung mit bis zu 62 Gewichts-% Formaldehyd und einem Methanol-Gehalt von etwa 0.3 % erhalten werden. Nach Abdestillieren des überschüssigen Methanols können die genannten Methanolgehalte realisiert werden.

In einer weiteren bevorzugten Ausführungsform weisen die Starterlösung und/oder die Formaldehyd-Lösung einen Gehalt an Ameisensäure von ≤ 100 ppm, bezogen auf das Gesamtgewicht der Lösung, auf. Bevorzugt sind Gehalte von ≤ 50 ppm, mehr bevorzugt ≤ 10 ppm.

Andere Herstellungsverfahren für Formaldehyd wie das Metalloxid-Verfahren ergeben höhere Methanol- und Ameisensäuregehalte und liefern deshalb niedrigere Ausbeuten im erfindungsgemäßen Verfahren.

Weiterhin ist die Abwesenheit von Stabilisatoren, wie z. B. Benzoguanamin, die hochprozentigen Formaldehyd-Lösungen zugesetzt werden, im erfindungsgemäßen Verfahren bevorzugt.

In einer weiteren bevorzugten Ausführungsform ist die Base in der Starterlösung und/oder in Schritt B) ein Alkalimetallhydroxid, ein Erdalkalimetallhydroxid, ein Amin oder deren Mischung. Beispiele für Amine sind tertiäre Amine wie Hexamin (Urotropin) oder Triethylamin. Die anorganischen Basen sind bevorzugt, denn sie lassen sich, verglichen mit organischen Basen wie Aminen, leichter vom Reaktionsprodukt oder der Mutterlauge mittels Ionenaustauscherharzen abtrennen.

Bevorzugt sind Natriumhydroxid und/oder Kaliumhydroxid in der Starterlösung und in Schritt B).

Diese Basen ergaben in eigenen Untersuchungen vergleichbare Reinheiten und Ausbeuten des Produktes. Beispielsweise können Natronlauge oder Kalilauge mit Konzentrationen von ≥ 400 g/Liter bis ≤ 600 g/Liter eingesetzt werden, insbesondere in Schritt B). Besonders bevorzugt ist die kostengünstige Natronlauge.

In einer weiteren bevorzugten Ausführungsform wird nach beendeter Zugabe der Lösung der Base die Temperatur der Reaktionsmischung verringert. Dann kann eine Nachreaktion ablaufen, die die Ausbeute weiter erhöht.

In einer weiteren bevorzugten Ausführungsform wird nach beendeter Zugabe der Lösung der Base die Temperatur der Reaktionsmischung über einen Zeitraum von ≥ 3 Stunden bis ≤ 6 Stunden auf eine Temperatur von ≥ 18 °C bis ≤ 24 °C verringert.

In einer weiteren bevorzugten Ausführungsform umfasst das Verfahren einen zeitlich nachgelagerten Trennungsschritt unter Erhalt eines festen Polyoxymethylen-Polymers und einer Mutterlauge. Die Trennung kann zum Beispiel durch Abfiltrieren oder Abzentrifugieren erfolgen.

In einer weiteren bevorzugten Ausführungsform wird nach dem Trennungsschritt wenigstens ein Teil der die Mutterlauge aufkonzentriert und als Starterlösung für die Reaktion der wässrigen Formaldehyd-Lösung mit der wässrigen Lösung einer Base eingesetzt.

In einer weiteren bevorzugten Ausführungsform wird die nach dem Trennungsschritt erhaltene Mutterlauge und/oder die aufkonzentrierte Mutterlauge mit sauren und/oder basischen Ionenaustauscherharzen behandelt. Somit werden aus den Edukten stammende Basen und während der Reaktion gebildete Ameisensäure entfernt.

In einer weiteren bevorzugten Ausführungsform enthalten die Starterlösung, die Formaldehyd-Lösung und/oder die Lösung der Base weiterhin ein Polyol. Neben niedermolekularen Polyolen wie Glycerin, 1,1,1-Trimethylolpropan, 2-(Hydroxymethyl)-2-methyl-1,3-propandiol, Pentaerythrit, Pentose-Zuckern oder Hexose-Zuckern können auch polymere Polyole wie Polyetherpolyole oder Polyesterpolyole zum Einsatz kommen. Auf diese Weise können Copolymere erhalten werden.

In einer weiteren bevorzugten Ausführungsform wird das Verfahren als kontinuierliches Verfahren durchgeführt.

Nachfolgend werden spezielle bevorzugte Vorgehensweisen für das erfindungsgemäße Verfahren beschrieben, ohne darauf beschränkt zu sein:

Die Reaktion wird mit einer ca. 40-45%igen Lösung gestartet, der entsprechend der obigen Vorgabe die benötigte Natronlauge-Menge zugesetzt wird. Dabei liegt die Starterlösungstemperatur bei 40-46 °C, die über eine Kühlungs-Heizungsregelung mittels eines Thermostaten (im Labor) eingestellt wird. Durch die einsetzende Reaktion scheidet sich der gewünschte Feststoff ab und die Formaldehyd-Konzentration in der Lösung sinkt. Dadurch kann nun kontinuierlich weitere hochprozentige Formaldehyd-Lösung und die entsprechende Natronlauge-Menge zugegeben werden, wodurch sich die Formaldehyd-Konzentration in der Lösung wieder erhöht und die Lauge-Konzentration in der Gesamtlösung konstant gehalten wird. Je mehr reagierende Lösung sich im Reaktor befindet, desto mehr Reaktion findet statt und desto schneller können hochprozentige Formaldehyd-Lösung und Natronlauge zugegeben werden. Für die Einstellung einer optimalen Reaktionszeit ist deshalb die Kenntnis der Reaktionskinetik vorteilhaft, die über die Messung der Formaldehydkonzentration in Abhängigkeit von der Zeit ermittelt werden kann.

Die Zugabe ist beendet, wenn der Reaktor komplett gefüllt ist. Man lässt nun die Reaktion ausklingen, wobei die Reaktionstemperatur entsprechend der Abnahme der Formaldehyd-Konzentration in der Lösung auf etwa 20 °C abgesenkt werden sollte Nach Beendigung der Reaktion erfolgt die Aufarbeitung, indem die wässrige Mutterlauge vom Feststoff durch Filtration bzw. Zentrifugierung abgetrennt wird. Der Filterkuchen wird zur Entfernung der Lauge und wasserlöslicher Nebenprodukte gründlich mit Wasser gewaschen, bis dieses neutral abläuft, und danach getrocknet, z. B. in einem Vakuumtrockner bei einer Temperatur von maximal 45 °C. Die abgetrennte Mutterlauge wird mit dem Waschwasser vereinigt und zur Gewinnung des nicht umgesetzten Formaldehyds getrennt aufgearbeitet.

Diese Arbeitsgänge lassen sich mittels einer Apparatur aus Reaktionsbehälter und Drucknutsche mit Vakuumanschluss/-destillation in größerem Maßstab realisieren.

Eine vollkontinuierliche Arbeitsweise ist möglich, in dem mit einer Rührkesselkaskade gearbeitet wird. Ein erster Reaktor dient als Mischreaktor, in dem die Reaktion anläuft. In einem zweiten Reaktor wird sie fortgesetzt. Dieser Reaktor dient gleichzeitig als Puffer für dritte und vierte Reaktoren, in denen die Reaktion zu Ende geführt wird und aus denen die Beschickung der Zentrifuge erfolgt. Die Auslegung der Reaktoren hat vorzugsweise so zu erfolgen, dass der dritte Reaktor gerade leer geworden ist, wenn der vierte Reaktor voll wird bzw. umgekehrt.

Das so erhaltene Produkt fällt in einer Ausbeute von bis zu 75 % bezogen auf die eingesetzte Formaldehyd-Menge an, hat eine Reinheit von 98-98,5 % bez. Formaldehyd und einen Wassergehalt von 0,02 bis 0,1 %.

Da die denkbaren Nebenprodukte alle gut löslich in Wasser sind und sich deshalb beim Waschprozess gut entfernen lassen, kann der Befund einer Reinheit von 98-99 % nur erklärt werden, in dem man annimmt, das der gebildete Zucker in das Formaldehydpolymer eingebaut worden ist. Es handelt sich also um ein Copolymer aus Formaldehyd und den Zuckern. Eine genauere Untersuchung an dem Propylenoxid-Derivat mit ¹H-NMR offenbart außerdem, dass auch geringe Mengen an Methanol in die Formaldehydkette einpolymerisiert wurden.

Im Unterschied zu Paraformaldehyd, das je nach Herstellung und Nachbehandlung noch 4 bis 8 % Wasser enthält (Bestimmung nach Karl-Fischer), kann in diesem neuartigen Formaldehyd-Polymer mit der gleichen Methode nur noch ein Wassergehalt normalerweise < 0,1 % nachgewiesen werden. Die Produktreinheit, gemessen über die übliche Formaldehyd-Titrationsmethode, liegt zwischen 98-99 %, meist um 98,5 %. Folglich ergibt sich die Summe zu 100 über die Inkorporation von Methanol und Zuckermoleküle.

Die Ausbeute an Feststoff beträgt 70-75 %, die Ausbeute an verdünnter wässriger Formaldehyd-Lösung etwa 12-18 %, jeweils bezogen auf die eingesetzte Formaldehyd-Menge. Der restliche Formaldehyd geht durch die Nebenreaktionen oder im Abwasser verloren. Zur Entsorgung als Abwasser wird das Waschwasser mit Lauge versetzt und erhitzt. Dabei verzuckert noch evtl. enthaltener Formaldehyd, so dass die Lösung somit entgiftet ist und über eine Kläranlage entsorgt werden kann.

Ein Teil der rückgewonnenen Mutterlauge kann in den entleerten Reaktor zurückgeführt werden und dient als Bestandteil der Starterlösung, nachdem sie auf die Reaktionstemperatur erwärmt und mit hochprozentiger Formaldehyd-Lösung auf etwa 40 % Formaldehydkonzentration eingestellt wurde. Durch Zugabe von weiterer hochprozentiger Formaldehyd-Lösung und weiterer Natronlauge beginnt der Prozess erneut.

Die Aufarbeitung der Mutterlauge und des Waschwassers zur Rückgewinnung des nicht umgesetzten Formaldehyds, die nach der Abtrennung des festen Formaldehydpolymers anfallen, ist nach folgenden Methoden möglich:
- Entfernung der eingesetzten Lauge und der entstandenen Ameisensäure mittels saurer und basischer Ionenaustauscherharze. Diese lassen sich mittels Säure bzw. Laugen regenerieren, wenn ihre Kapazität erschöpft ist. Im Falle der Aufarbeitung der Mutterlauge durch eine Druckdestillation reicht es aus, die laugehaltige Mutterlauge mittels einer Säure, z. B. HCl, zu neutralisieren.
- Aus den so erhaltenen Lösungen können nun destillativ Formaldehyd-Lösungen gewonnen werden, die frei von Nebenprodukten sind. Die Druckdestillation liefert dabei hochprozentige Formaldehyd-Lösungen und die Vakuumdestillation niedrigprozentige Formaldehyd-Lösungen. Die so erhaltenen sauberen Formaldehyd-Lösungen können zu vielfältigen Verwendungszwecken eingesetzt werden.
- Für Sonderanwendungen ist keine Destillation erforderlich. So werden zuckerhaltige Formaldehyd-Lösungen zur Herstellung von Spezialpapieren verwendet. Dazu muss die Lösung lediglich frei von Lauge sein.
- Ein Sonderfall ergibt sich auch, wenn Hexamin als Base/Katalysator eingesetzt wurde. Die verbleibende wässrige formaldehydhaltige Lösung wird mit Ammoniak oder Ammonkarbonat versetzt, so dass der Formaldehydanteil zu Hexamin umgesetzt wird. Die resultierende Hexaminlösung kann zur Silagebehandlung in der Landwirtschaft oder zur Herstellung eines Bakelitharzes für die Formsandverfestigung eingesetzt werden, welches bei der Gußeisenherstellung benötigt wird. Da aber der Hexamin-Gehalt im getrockneten Hexamin unter 99% liegt, bleiben viele weitere Anwendungszwecke versperrt.

Die Entsorgung wässrigen Abfalllösungen mit niedrigen Formaldehydgehalten geschieht durch Zugabe von Natronlauge und Erhitzen der Lösung bis zum Siedepunkt. Dadurch werden die restlichen Formaldehydanteile der Lösung zu den Zuckern Fructose und Sorbose umgesetzt, die bei den hohen Temperaturen karamellisieren. Es entsteht eine braune ungiftige Lösung, die von den Bakterien der Kläranlage gut verstoffwechselt werden kann

Zur optimalen Auslegung der Behälter und zur Durchführung der Reaktion ist die Kenntnis der Reaktionsgeschwindigkeit erforderlich. Hierzu können in einem Versuch zeitabhängig Proben des reagierenden Gemisches entnommen, der Feststoffanteil entfernt und der Formaldehyd-Gehalt der Lösung durch Titration ermittelt werden. Mit Hilfe der so gewonnenen kinetischen Daten ist eine Berechnung der erforderlichen Behältergrößen möglich.

Das gewaschene Polymer wird noch getrocknet. Hierzu geeignet sich am besten eine Vakuumtrocknung bei niedriger Temperatur. Bei optimalen Reaktionsbedingungen ist entsprechend der bisherigen Beschreibung des Prozesses ein weißes gut rieselfähiges Produkt in einer Ausbeute von bis zu 75 % entstanden. Zusammen mit dem aus der Mutterlauge und dem Waschwasser rückgewonnenen Formaldehyd ergibt sich eine Gesamtausbeute bezogen auf Formaldehyd von bis zu 90 %.

Bei der gleichzeitigen Zugabe von Polyolen zur Reaktionslösung lassen sich Formaldehyd-Copolymere herstellen. Diese Zugabe sollte ebenfalls möglichst kontinuierlich erfolgen, um eine gleichmäßige Zusammensetzung der Lösung zu gewährleisten. Geeignete niedermolekulare Polyolen sind z. B. Glycerin, 1,1,1-Trimethylolpropan, 2-(Hydroxymethyl)-2-methyl-1,3-propandiol, Pentaerythrit, Pentose-Zucker und Hexose-Zucker und es können auch polymere Polyole wie Polyetherpolyole oder Polyesterpolyole zum Einsatz kommen. Auf diese Weise werden Copolymere erhalten. Ausbeute und Zusammensetzung des Copolymers schwanken je nach Art des zugesetzten Polyols und von der zugesetzten Menge.

Anstelle von einer hauptsächlich linearen Struktur des erhaltenen Formaldehyd-Polymers führen diese Stoffe zu verzweigtkettigen Polymeren, die andere Eigenschaften besitzen als die geradkettigen Polymere aus den Umsetzungen ohne Polyol-Zusatz.

Es lassen sich so Polymerprodukte mit einem Formaldehydgehalt von 85 % bis zu 96 % und einem Wassergehalt von ≤ 1 Gewichts-%, bezogen auf das Gesamtgewicht des Polymers, erhalten.

Die Erfindung betrifft ebenfalls ein Polyoxymethylen-Polymer, welches durch ein erfindungsgemäßes Verfahren erhältlich ist, mit einem Wassergehalt von ≤. 1 Gewichts-%, bezogen auf das Gesamtgewicht des Polymers. Bevorzugt sind Wassergehalte von ≤ 0.1 Gewichts-%, mehr bevorzugt ≤ 0.05 Gewichts-%. Im Rahmen der vorliegenden Erfindung wird der Wassergehalt des Polyoxymethylen-Polymers mittels coulometrischer Karl Fischer-Titration bestimmt.

In einer bevorzugten Ausführungsform weist das Polyoxymethylen-Polymer eine durchschnittliche Molekülmasse von ≥ 1100 g/mol bis ≤ 3000 g/mol (vorzugsweise ≥ 1200 g/mol bis ≤ 2500 g/mol, mehr bevorzugt ≥ 1400 g/mol bis ≤ 2400 g/mol) auf. Die Molekülmasse lässt sich nach einer Derivatisierung mit Propylenoxid durch ¹H- und ¹³C-NMR-Spektroskopie bestimmen.

Die Erfindung wird anhand der nachfolgenden Beispiele und Figuren näher erläutert, ohne jedoch darauf beschränkt zu sein. Für die Stoffmengenberechnung der eingesetzten 50%igen Natronlauge wurde eine Dichte von 1,524 g/ml, eine Massenkonzentration von 762,2 g NaOH und eine Stoffmengenkonzentration von 19,05 mol NaOH/l zugrunde gelegt.

### Beispiel 1:

Es wurde ein metallenes Doppelmantelgefäß mit ca. 12 ltr. Inhalt verwendet, das mittels eines Thermostats auf die gewünschte Temperatur geheizt/gekühlt werden konnte. Das Gefäß war mit einem Rührer versehen.

In diesem Gefäß wurde zunächst die Starterlösung zubereitet. Es wurden 1234 g einer methanolarmen wässrigen Formaldehydlösung, die 502 g Formaldehyd enthielt, vorgelegt. In diese Lösung wurde unter Rühren 11,6 ml einer 50%ige Natronlauge zugegeben, so dass die Starterlösung erhalten wurde. Das Reaktionsgefäß und damit die Lösung wurden auf 42 °C mittels des Thermostats beheizt bzw. gekühlt.

Anschließend wurden bei 42 °C Reaktionstemperatur Formaldehyd-Lösung und Natronlauge hinzugefügt. In der folgenden Tabelle sind die Formaldehyd- und Natronlauge-Menge zu den jeweiligen Zeiten aufgelistet, die bis dahin dosiert worden waren. Die Angabe bei Null Minuten entspricht der Zusammensetzung der Starterlösung.

| Zeit [min] | Formaldehyd-Lösung [g] | Berechnet 100% Formaldehyd [g] | 50%ige NaOH [ml] |
|---|---|---|---|
| 0 | 1234 | 502 | 11,6 |
| 45 | 2508 | 1279 | 29,6 |
| 80 | 4392 | 2428 | 56,3 |
| 130 | 6224 | 3603 | 83,3 |
| 215 | 8107 | 4751 | 110 |
| 260 | 10037 | 5926 | 137 |

Danach war das Reaktionsgefäß gefüllt, weshalb die Zugabe gestoppt wurde. Insgesamt wurden 197,3 mol Formaldehyd und 2,6 mol NaOH verarbeitet. Dieses entspricht einem molaren Verhältnis von Formaldehyd zu Base von 75,6:1.

Nach Beendigung der Zugabe wurde begonnen, die Temperatur im Doppelmantelgefäß mittels des Thermostaten abzusenken. In etwa 4 Stunden wurde eine Temperatur von etwa 20-22 °C erreicht. Danach ließ man noch 2-3 Stunden nachreagieren. Anschließend wurde die Lösung mitsamt dem ausgefallenen Feststoff auf eine Nutsche mit Saugflasche passender Größe überführt und durch Anlegen eines Vakuums auf die Saugflasche trocken gesaugt, bis nichts mehr nachtropfte. Die so erhaltene Mutterlauge wurde aus der Saugflasche entfernt und einer Vakuumdestillation zugeführt. Das Material auf der Nutsche wurde mit etwa 5 ltr. Wasser ausgewaschen. Das Waschwasser muss zuletzt neutral ablaufen, d. h. es enthielt keine Lauge mehr. Danach wurde der Feststoff trocken gesaugt und anschließend in einem Trockner bei niedriger Temperatur (< 45 °C) und bei Normaldruck bis leichtem Vakuum (ca. 200 mbar) getrocknet. Die Ausbeute an Feststoff betrug bis zu 75,2 % des eingesetzten Formaldehyds, der in der Analyse eine Reinheit von 98,3 % (Formaldehyd-Titration) und eine Restfeuchte von < 0,1 % (Titration nach Karl-Fischer) aufwies.

Die Mutterlauge wurde im Vakuum eingedampft (Siedetemperatur 45 °C/60-80 mbar). Es wurde eine 13%ige Formaldehydlösung erhalten. Die Ausbeute berechnet über den Feststoff und dem rückgewonnenen Formaldehyd betrug 88,2 %.

Dieser Versuch wurde mehrfach wiederholt. Die erhaltenen Proben wurden mit Propylenoxid umgesetzt. Es wurden überraschenderweise flüssige Produkte erhalten. Anhand der Auswertung der Stoffverbräuche sowie durch die Anwendung physikalischer Messmethoden, insbesondere ¹H-NMR und ¹³C-NMR, konnten Molekülmassen von ca. 1400 g/mol ermittelt werden.

### Beispiel 2:

Es wurde die gleiche Apparatur wie in Beispiel 1 verwendet. Zum Einsatz kamen neben der Starterlösung eine 50 %ige Natronlauge und eine hochprozentige Formaldehydlösung. Die Temperatur im Reaktionsgefäß wurde mittels des Thermostaten auf 42 °C gehalten. In der folgenden Tabelle sind die Formaldehyd- und Natronlauge-Menge zu den jeweiligen Zeiten aufgelistet, die bis dahin dosiert worden waren. Die Angabe bei Null Minuten entspricht der Zusammensetzung der Starterlösung.

| Zeit [min] | Formaldehyd-Lösung [g] | berechnet 100% Formaldehyd [g] | 50%ige NaOH [ml] |
|---|---|---|---|
| 0 | 1223 | 533 | 12,4 |
| 40 | 2487 | 1304 | 30,4 |
| 84 | 4370 | 2452 | 57,1 |
| 120 | 6263 | 3606 | 83,9 |
| 180 | 8217 | 4797 | 112 |
| 270 | 10757 | 6346 | 148 |

Insgesamt wurden 211,3 mol Formaldehyd und 2,8 mol NaOH verarbeitet. Dieses entspricht einem molaren Verhältnis von Formaldehyd zu Base von 75,0:1.

Nach Beendigung der Zugabe wurde die Temperatur mittels des Thermostaten über 4 Stunden auf 20 °C abgesenkt. Nach weiteren 5 Stunden Nachreaktionszeit erfolgte die Aufarbeitung mittels Nutsche und Saugflasche. Nach dem Abtrennen der Mutterlauge und dem Auswaschen des Feststoffkuchens auf der Nutsche und dem anschließenden Trocknen des Produktes wurden erhalten:

4710 g Feststoff = 74,2 % bez. Formaldehyd mit einer Reinheit von 98,5 % und einem Wassergehalt von < 0,1 % sowie 3470 g Mutterlauge mit einem Formaldehyd-Gehalt von 21,7 % = 753 g Formaldehyd bzw. 11,8 % der ursprünglichen Formaldehyd-Menge. In 5900 g Waschwasser waren weitere 8,5 % Formaldehyd = 502 g Formaldehyd enthalten. Somit war der Verbleib von 94 % des eingesetzten Formaldehyds nachweisbar. 6 % der eingesetzten Formaldehyd-Menge haben sich infolge der Cannizzaro-Reaktion zu Ameisensäure und Methanol sowie durch die sog. "Verzuckerungsreaktion" zu Sorbose und Fruktose umgesetzt.

Die Mutterlauge konnte mittels Ionenaustauscherharze sowohl von Natronlauge wie auch von Ameisensäure befreit werden. Zunächst wurde die Natronlauge entfernt. Dafür wurde ein stark saures Ionenaustauscherharz verwendet. Nach dem Durchlauf durch das Harz wurde eine sauer reagierende Lösung erhalten, in der mittels Säuretitration ein Ameisensäure-Gehalt von 1,3 % ermittelt wurde. Daraus berechnet sich ein Umsatz von etwa 3 % des eingesetzten Formaldehyds entsprechend der Cannizzaro-Reaktion zu Ameisensäure und Methanol. Ebenso müssen weitere 3 % des eingesetzten Formaldehyds zu Sorbose und Fruktose reagiert haben, da 94 % des Formaldehyds in Form von Polymer und wässrige Lösung vorliegen.

Die Ameisensäure wurde mittels eines stark basischen Ionenaustauscherharzes ebenfalls entfernt, so dass eine neutrale Lösung resultiert. Diese konnte für die Herstellung sog. "Tränkharze" für die Herstellung von Spezialpapieren verwendet werden, indem die Lösung entsprechend der dort geltenden Rezepturen beigemischt wurde. Zur Reduzierung des Formaldehyd-Gehaltes im Waschwasser und zur Erhöhung der Mutterlauge-Menge kann vorgesehen werden, den feuchten Filterkuchen in einer großtechnischen Anlage durch Anlegen eines guten Vakuums mittels einer Wasserringpumpe zu trocknen, bevor der Waschvorgang eingeleitet wurde.

Als Fazit dieses Experiments lässt sich festhalten, dass durch die andere Formaldehydkonzentration als in Beispiel 1 eine andere Molmasse der Produkte erhalten wurde (bestimmt durch Propoxylierung zu ca. 2000 g/mol).

### Beispiel 3:

Die Versuchsdurchführung erfolgte analog Beispiel 1. Zusätzlich wurden auf je 30 g Formaldehyd (als 100 % berechnet) je 1 g 1,1,1-Trimethylolpropan zugesetzt. Der Starterlösung wurde das TMP anteilig hinzugefügt. Insgesamt wurden 6014 g Formaldehyd in Form einer 60,8 %igen wässrigen Lösung, 155 ml einer 50%igen Natronlauge und 200 g 1,1,1-Trimethylpropan bei 42 °C innerhalb von 5,3 Stunden in das Reaktionsgefäß dosiert.

Es wurden 200,3 mol Formaldehyd und 3,0 mol NaOH verarbeitet. Dieses entspricht einem molaren Verhältnis von Formaldehyd zu Base von 67,8:1.

Nach Reaktionsende wurde die Lösung filtriert und so der Feststoff isoliert. Nach dem Auswaschen der anhaftenden Lösung und der Trocknung des Feststoffes wurden 3392 g eines polymeren Formaldehyds erhalten entsprechend einer Ausbeute von 54,6 % bezogen auf die Summe von Formaldehyd 100%ig und 1,1,1-Trimethylolpropan. Der Formaldehyd-Gehalt des Feststoffes betrug 95,4 % und die Restfeuchte 0,04 %. Diese Analysenergebnisse belegen, dass das 1,1,1-Trimethylpropan in die Polymerkette des Formaldehyds eingebaut wurde. Folglich ist diese Polymerkette nicht mehr geradlinig, sondern verzweigt. Die Mutterlauge enthielt 23,8 % Formaldehyd.

### Beispiel 4:

Die Versuchsdurchführung erfolgte analog Beispiel 1. Zusätzlich wurden auf je 13,3 g Formaldehyd (100 %) je 1 g 1,1,1-Trimethylolpropan zugesetzt. Der Starterlösung wurde das TMP anteilig hinzugefügt. Insgesamt wurden 5777 g Formaldehyd in Form einer 61,1 %igen wässrigen Lösung, 135 ml einer 50%igen Natronlauge und 432 g 1,1,1-Trimethylpropan bei 42 °C innerhalb von 5 Stunden in das Reaktionsgefäß dosiert. Somit wurden 192,4 mol Formaldehyd und 2,6 mol NaOH verarbeitet. Dieses entspricht einem molaren Verhältnis von Formaldehyd zu Base von 74,8:1.

Nach Reaktionsende wurde die Lösung filtriert und so der Feststoff isoliert. Nach dem Auswaschen der anhaftenden Lösung und der Trocknung des Feststoffes wurden 3643 g eines polymeren Formaldehyds erhalten entsprechend einer Ausbeute von 56,4% bezogen auf die Summe von Formaldehyd 100%ig und 1,1,1-Trimethylolpropan. Der Formaldehyd-Gehalt des Feststoffes betrug 92,3 % und die Restfeuchte 0,2 %. Diese Analysenergebnisse belegen, dass das 1,1,1-Trimethylpropan in die Polymerkette des Formaldehyds eingebaut wurde. Folglich ist diese Polymerkette nicht mehr geradlinig, sondern verzweigt und zwar stärker als im Beispiel 3.

### Beispiel 5 (Vergleichsbeispiel): Reaktion bei 33 °C mit einer 34%igen Formaldehydlösung

Es wurde eine Starterlösung mit einer 34%igen Formaldehyd-Lösung und mit Natronlauge vorgelegt. Die Molverhältnisse zueinander entsprachen den Mengenverhältnissen wie im Beispiel 1. Die Temperatur der Lösung wurde auf 33 °C eingestellt und die Zudosierung weiterer Formaldehyd-Lösung und wässriger Natronlauge wurde ebenfalls bei dieser Temperatur durchgeführt. Durch Entnahme kleiner Flüssigkeitsmengen und Abtrennung von entstandenem Feststoff durch Filtration konnten die Proben auf Formaldehyd-Gehalt titriert werden. Die Zugabegeschwindigkeit der beiden Komponenten in den Ansatz wurde so gewählt, dass der Formaldehyd-Gehalt nicht nennenswert über 30% anstieg. Zweck dieser Maßnahme war, Unterkühlung der zugesetzten hochprozentigen Formaldehyd-Lösung und damit unkontrollierte Abscheidung von klebrigem Paraformaldehyd zu vermeiden.

Die Reaktionsgeschwindigkeit sank auf etwa 40 % im Vergleich zum Arbeiten bei 42 °C mit einer ca. 40%igen Formaldehyd-Lösung, so dass die Reaktionsdauer um das 2,5 fache anstieg. Es wurden insgesamt 4333 g Formaldehyd (berechnet als 100 %) und 101 ml einer 50%igen Natronlauge dosiert. Erhalten wurden 2903 g Feststoff, was einer Ausbeute von 67 % auf Formaldehyd entspricht. Die Reinheit betrug 98,1 %, die Restfeuchte 0,1 %. Wegen der Gesamtdauer des Versuches von mehr als 14 Stunden und der schlechteren Ausbeute wurde diese Arbeitsweise nicht weiter verfolgt. Eine höhere Reinheit gegenüber dem Produkt aus Beispiel 1 konnte ebenfalls nicht festgestellt werden.

### Beispiel 6 (Vergleichsbeispiel): Reaktion bei 55 °C mit einer 60,1%igen Formaldehyd-Lösung

Die Versuchsdurchführung erfolgte analog Beispiel 1, jedoch mit einer 60,1%igen Formaldehyd-Lösung und bei 55°C. Die Laugemenge wurde wie bei Beispiel 1 gewählt. Die Lösung färbte sich bereits kurz nach dem Start der Reaktion gelblich. Die Reaktionsgeschwindigkeit - gemessen durch Titration der Formaldehydkonzentration in der Lösung - war etwa 1,5 mal schneller als bei Versuch 1, so dass die Dosiergeschwindigkeit entsprechend erhöht wurde. Nach der Zugabe von 5342 g Formaldehyd (100 %ig) und 126 ml einer 50%igen Natronlauge wurde der ausgefallene Feststoff abfiltriert und getrocknet. Erhalten wurden 2243 g Feststoff, was einer Ausbeute von 41,9 % entspricht. Die Mutterlauge war deutlich gelblich verfärbt. Die Reinheit betrug 96,2 %, die Restfeuchte 0,2 %. Folglich ist dieses Versuchsergebnis deutlich schlechter als das Ergebnis aus Beispiel 1.

### Beispiel 7 (Vergleichsbeispiel): Reaktion bei 42 °C und erhöhter Natronlauge-Menge im Vergleich zu Beispiel 1

Die Versuchsdurchführung erfolgte wie im Beispiel 1. Die eingesetzte Formaldehyd-Lösung hatte einen Gehalt von 62,0 %. Es wurden 5337 g Formaldehyd (100 %ig) dosiert und 173 ml einer 50 %igen Natronlauge. Erhalten wurden 3929 g Feststoff, entsprechend einer Ausbeute von 64,6 %. Es wurden 177,7 mol Formaldehyd und 3,3 mol NaOH verarbeitet. Dieses entspricht einem molaren Verhältnis von Formaldehyd zu Base 53,9:1.

Die Reinheit betrug 99,0 %, die Restfeuchte 0,07 %. Fazit: Eine Erhöhung der Natronlauge-Menge führt zu einer schlechteren Ausbeute als in Beispiel 1.

### Beispiel 8 (Vergleichsbeispiel): Reaktion bei 42 °C und geringerer Natronlauge-Menge im Vergleich zu Beispiel 1

Die Versuchsdurchführung erfolgte wie im Beispiel 1. Die eingesetzte Formaldehyd-Lösung hatte einen Gehalt von 61,0 %. Es wurden 5858 g Formaldehyd (100%ig) dosiert und 110,9 ml einer 50%igen Natronlauge. Erhalten wurden 4081 g Feststoff entsprechend einer Ausbeute von 69,7 % bezogen auf Formaldehyd. Es wurden 195,1 mol Formaldehyd und 2,1 mol NaOH verarbeitet. Dieses entspricht einem molaren Verhältnis von Formaldehyd zu Base 92,3 von :1.

Die Reinheit betrug 98,8 %, die Restfeuchte 0,05 %. Fazit: Eine Reduzierung der Natronlauge-Menge führt zu einer schlechteren Ausbeute als in Beispiel 1.

## Patentansprüche

1. Verfahren zur Herstellung von Polyoxymethylen-Polymeren, umfassend die Reaktion von wässriger Formaldehyd-Lösung mit einer wässrigen Lösung einer Base,
**dadurch gekennzeichnet, dass**
A) eine Starterlösung umfassend Formaldehyd vorgelegt wird und
B) eine wässrige Formaldehyd-Lösung und eine Base zu der Starterlösung hinzugefügt werden, so dass eine Reaktionsmischung erhalten wird,
wobei die Starterlösung in Schritt A) eine Temperatur von ≥ 40 °C bis ≤ 46 °C aufweist,
die Zugaben der Lösungen in Schritt B) bei einer Temperatur der Reaktionsmischung von ≥ 40 °C bis ≤ 46 °C durchgeführt werden und
für den Fall, dass die Base ein Alkalimetallhydroxid ist:
- das molare Verhältnis von Formaldehyd zu Base ≥ 55:1 bis ≤ 90:1, bezogen auf die Gesamtmengen an im Verfahren eingesetzten Formaldehyd und Base, beträgt und
- die Base in Schritt B) in wässriger Lösung hinzugefügt wird.

2. Verfahren gemäß Anspruch 1, wobei die Starterlösung eine wässrige Starterlösung ist.

3. Verfahren gemäß Anspruch 1 oder 2, wobei die Starterlösung weiterhin eine Base umfasst.

4. Verfahren gemäß einem der Ansprüche 1 bis 3, wobei die Starterlösung einen Formaldehydgehalt von ≥ 35 Gewichts-% bis ≤ 50 Gewichts-%, bezogen auf das Gesamtgewicht der Lösung, aufweist.

5. Verfahren gemäß einem der Ansprüche 1 bis 4, wobei die Formaldehyd-Lösung in Schritt B) einen Formaldehydgehalt von ≥ 50 Gewichts-%, bezogen auf das Gesamtgewicht der Lösung, aufweist.

6. Verfahren gemäß einem der Ansprüche 1 bis 5, wobei die Starterlösung und/oder die Formaldehyd-Lösung in Schritt B) einen Gehalt an Methanol von ≤ 1 Gewichts-%, bezogen auf das Gesamtgewicht der Lösung, aufweisen.

7. Verfahren gemäß einem der Ansprüche 1 bis 6, wobei die Base in der Starterlösung und/oder in Schritt B) ein Alkalimetallhydroxid, ein Erdalkalimetallhydroxid, ein Amin oder deren Mischung ist.

8. Verfahren gemäß einem der Ansprüche 1 bis 7, wobei nach beendeter Zugabe der Lösung der Base die Temperatur der Reaktionsmischung verringert wird.

9. Verfahren gemäß einem der Ansprüche 1 bis 8, weiter umfassend einen zeitlich nachgelagerten Trennungsschritt unter Erhalt eines festen Polyoxymethylen-Polymers und einer Mutterlauge.

10. Verfahren gemäß Anspruch 9, wobei nach dem Trennungsschritt wenigstens ein Teiil der Mutterlauge aufkonzentriert wird und als Starterlösung für die Reaktion der wässrigen Formaldehyd-Lösung mit der wässrigen Lösung einer Base eingesetzt wird.

11. Verfahren gemäß Anspruch 9 oder 10, wobei die nach dem Trennungsschritt erhaltene Mutterlauge und/oder die aufkonzentrierte Mutterlauge mit sauren und/oder basischen Ionenaustauscherharzen behandelt werden.

12. Verfahren gemäß einem der Ansprüche 1 bis 11, wobei die Starterlösung, die Formaldehyd-Lösung und/oder die Lösung der Base weiterhin ein Polyol enthalten.

13. Verfahren gemäß einem der Ansprüche 1 bis 12, wobei das Verfahren als kontinuierliches Verfahren durchgeführt wird.

14. Polyoxymethylen-Polymer, erhältlich durch ein Verfahren gemäß einem der Ansprüche 1 bis 13, mit einem Wassergehalt von ≤ 1 Gewichts-%, bezogen auf das Gesamtgewicht des Polymers.

15. Polyoxymethylen-Polymer gemäß Anspruch 15 mit einer durchschnittlichen Molekülmasse von ≥ 1100 g/mol bis ≤ 3000 g/mol.
